# EUROPEAN PATENT SPECIFICATION

(11) **EP 0 604 750 B1**
(45) Date of publication and mention of the grant of the patent: **04.03.1998**
(21) Application number: 93118577.1
(22) Date of filing: 18.11.1993
(51) Int. Cl.: B29C 43/18

(54) **Process for producing abrasion-resistant transparent parts**
Verfahren zur Herstellung von abriebfesten, transparenten Teilen
Procédé pour la fabrication d'objets transparents resistant à l'abrasion

(30) Priority: 19.11.1992 JP 310249/92
(43) Date of publication of application: 06.07.1994
(73) Proprietor: SUMITOMO CHEMICAL COMPANY LIMITED, Osaka-shi, Osaka 541 (JP)
(72) Inventor: Matsumura, Kazuhiro, Higashiosaka-shi (JP); Matsumoto, Masahito, Ibaraki-shi (JP)
(74) Representative: VOSSIUS & PARTNER

(56) References cited:
- EP-A- 0 333 198
- GB-A- 1 241 236
- PATENT ABSTRACTS OF JAPAN vol. 015, no. 310 (M-1144)8 August 1991 & JP-A-03 114 719 (HASHIMOTO FORMING IND.) 15 May 1991
- DATABASE WPI Week 8829, Derwent Publications Ltd., London, GB; AN 88-200874 & JP-A-63 137 017 (AISIN SEIKI) 9 June 1988
- DATABASE WPI Week 8933, Derwent Publications Ltd., London, GB; AN 89-238899 & JP-A-1 174 515 (KOEI CHEM. IND.) 11 July 1989

## Description

The present invention relates to a process for producing abrasion-resistant transparent parts.

Due to their light weight and high impact strength as compared with glass, transparent resins such as acrylic resin, polycarbonate resin, polystyrene resin, SAN resin, ABS resin, polyvinyl chloride resin, polyester resin, acetate resin, etc., are widely used for a variety of transparent parts and articles including building components such as glazing, partitions, skydome, sunroof, carport, side panel, door, siding, etc., optical articles such as optical disc, lens, glasses, etc., automobile parts such as window shield, headlamp lens and cover, rear panel, pillar, meter cover, etc., electrical and industrial parts such as AV equipment nameplate and cover, front panel of CRT devices, lighting fixture cover, vending machine cover, etc., ornamental articles such as signboard, interior decoration, display, etc., and other miscellaneous commercial products. Generally, said transparent resins, in use thereof, are shaped into a desired form by a molding method such as injection molding or vacuum forming.

However, in the case of injection molding, it is required to increase clamping force, which necessarily leads to a larger scale of mechanism of the apparatus, so that this molding method is not suited for working a product having a large surface area. According to vacuum forming method, on the other hand, it is difficult to obtain a product having a complicate design, and also it is necessary to perform trimming after molding. Naturally the trimming loss leads to elevation of production cost.

Further, the transparent parts obtained by such molding method are poor in abrasion resistance of the surface and cause the problem that their visual appearance could be spoiled by various external actions or forces exerted thereto, such as contact (of other matters therewith), impact and scratching in use. Therefore, a hard coated surface layer is provided after molding to improve abrasion resistance. But this method increases the number of the steps in the production process, resulting in a hike of production cost.

As a solution to the above problem, a method has been proposed in which, as described in for instance JP-A-60-210432 and JP-A-61-5943, a transparent resin is injected into a mold which has already set therein a polycarbonate film or sheet coated with a hard coating agent, so that the hard coated sheet or film will be attached to the transparent resin.

According to this method, however, although abrasion resistance of the molded product is improved, there is the problem that the polycarbonate film forming the surface layer might suffer a thermal deformation in the course of lamination due to high injection pressure.

EP-A-0 333 198 discloses a process for producing a multilayer moulded article comprising a resin body and a skin material by:
- supplying a skin material between a male mould and a female mould which are attached to clamping means;
- starting closing the moulds and supplying a resin melt between the skin material and the male or the female mould while temporarily stopping the closing action of the mould or
   adjusting a closing rate at 30 mm/s or less
   when a cavity clearance between the moulds is in the range between (C+100)mm and (C+5)mm (C is the cavity clearance when the moulding is finished); and
- further closing the moulds to the cavity clearance of C to finish the moulding.

Object of the present invention is to obtain a transparent part laminated with a transparent abrasion-resistant film without thermal deformation, said part being capable of being produced with ease even under a relatively low clamping pressure, regardless of the configurational complication and the size of surface area of the part.

As a solution of the above problem the present invention provides a process for producing an abrasion-resistant transparent part, which comprises the steps of:
(a) disposing a transparent film 3 having a hard coated surface layer between a male mold 2 and a female mold 1 (first step);
(b) starting clamping of said male mold 2 and the female mold 1, and supplying a molten thermoplastic transparent resin 4 between said transparent film 3 and said male mold 2 or female mold 1 when the cavity clearance (a) formed between the male mold 2 and the female mold 1 is in the range of C + 0.1 to C + 7 mm (C: cavity clearance at the time of completion of molding), by temporarily stopping the clamping motion or by adjusting the clamping speed to 30 mm/sec or less (second step); and
(c) clamping the male mold 2 and the female mold 1 until the cavity clearance is reduced to C to perform molding (third step).

Fig. 1 is a longitudinal sectional view of a press molding die according to the present invention.

Fig. 2 is also a longitudinal sectional view of the above press molding die in a succeeding stage of molding.

Fig. 3 is another longitudinal sectional view of the above press molding die in an advanced stage of molding.

Fig. 4 is also a logitudinal sectional view of the above press molding die in the final stage of molding.

Fig. 5 is a perspective view of a glazing part for automobiles molded according to the present invention.

### Description of Reference Numerals

1: female mold
2: male mold
3: transparent film having hard coat surface layer
4: molten thermoplastic transparent resin
5: thermoplastic transparent resin
6: abrasion-resistant transparent part
7: set pin
8: resin passage
9: molded portion forming a glazing part for automobiles
10: molded portion not forming a glazing part for automobiles
   a: cavity clearance when a molten thermoplastic transparent resin is supplied
   b: shear clearance
   C: cavity clearance at the time of completion of molding

The process of the present invention is described below with reference to the accompanying drawings.

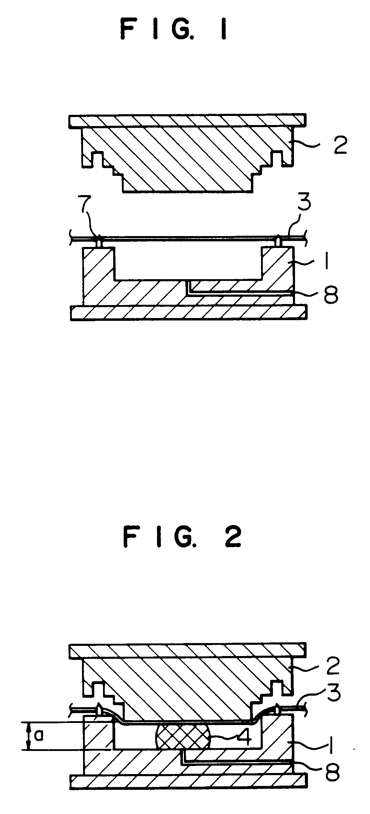

Figs. 1 to 4 are longitudinal sectional views of an example of molding apparatus used in carrying out the process of the present invention. Basically the apparatus consists of a female mold 1, a male mold 2, a resin feeder (not shown) by which a plasticized molten thermoplastic transparent resin is supplied into the mold cavity, and peripheral elements.

By using the above apparatus, the process is carried out as illustrated below.

### First step

A transparent film 3 coated with a hard coated surface layer is disposed, in the state of a continuous sheet or in a properly severed state, between a male mold 2 and a female mold 1 which can be clamped. (Fig. 1).

### Second step

The male mold 2 is lowered to start clamping of said male mold 2 and female mold 1, and by temporarily stopping the clamping motion or by adjusting the clamping speed to 30 mm/sec or less, a molten thermoplastic transparent resin 4 is supplied, through a resin passage (not shown) provided in the female mold 1, into the space formed between the transparent film 3 and the female mold 1 when the cavity clearance (a) between the male mold 2 and the female mold 1 is C + 0.1 to C + 7 mm. C is the cavity clearance provided at the time of completion of molding. (Fig. 2).

### Third step

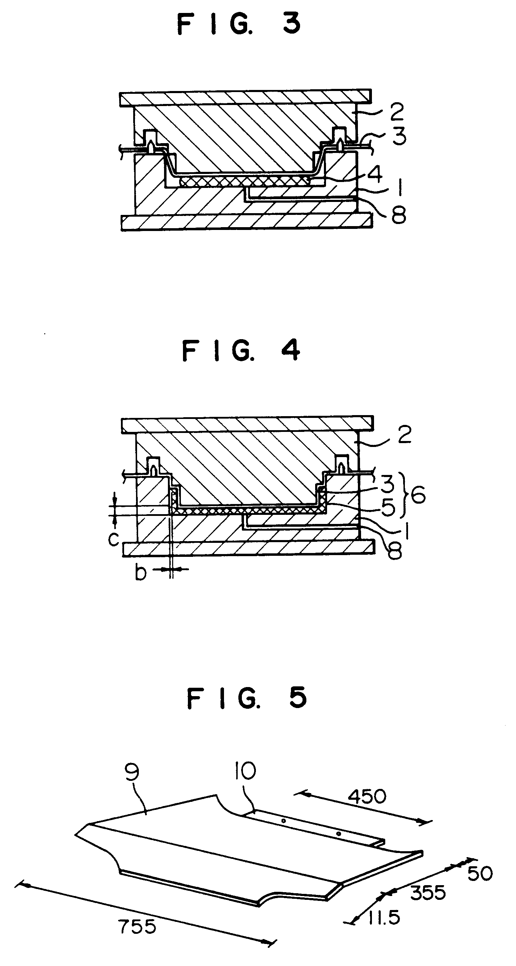

The male mold 2 is further lowered to effect clamping until the cavity clearance between the male and female molds reaches C, where the transparent film 3 and the transparent thermoplastic resin 5 are integrated to complete molding, thus forming a abrasion-resistant transparent part. (Figs. 3 and 4).

In the present invention, the "cavity clearance C at the time of completion of molding" means the cavity clearance which is provided when molding is completed by compressing the transparent film 3 and the transparent thermoplastic resin 5 into one piece.

Supply of the molten thermoplastic transparent resin 4 in the second step in the process of the present invention is conducted when the cavity clearance (a) between the male mold 2 and the female mold 1 is C + 0.1 to C + 7 mm. When the cavity clearance is greater than C + 7 mm, the surface of the supplied molten thermoplastic transparent resin tends to be cooled and shrunk to become uneven surface, and such unevenness of the resin surface is transferred to the transparent film 3 to make molded part rugged. On the other hand, when the cavity clearance is less than C + 0.1 mm, an excess amount of heat and resin pressure may be given to the area near the molten resin feed hole, causing undesirable phenomena such as generation of a depression or unevenness of the transparent film 3 near said resin feed hole. In the present invention, therefore, the cavity clearance (a) is positively controlled to stay between C + 7 mm and C + 0.1 mm, and the molten thermoplastic transparent resin 4 is supplied in between the transparent film and the male or female mold in a state where the mold clamping motion is stopped temporarily or the clamping speed is reduced to 30 mm/sec or less.

According to this method, the supplied resin swells out steadily as shown in Fig. 3, and heat is prevented from being concentrated to the area near the resin feed hole, allowing maintenance of the initial appearance of the transparent film. When the clamping speed exceeds 30 mm/sec, excess pressure is given to the transparent film near the resin feed hole, which may result in impairing the appearance of the transparent film. Mold clamping is preferably conducted at a speed of 0.1-20 mm/sec.

In case the molten thermoplastic transparent resin is supplied in a state where the clamping motion is stopped temporarily in the second step, it is desirable that clamping for molding in the third step be commenced before or simultaneously with completion of feed of the molten resin.

In connection to feed of the molten thermoplastic transparent resin into the cavity through the resin passage 8, the position of the resin feed hole (hereinafter referred to as gate) is not subject to any specific restrictions but can be arbitrarily decided according to the design of the product. There may be provided only one gate or two or more gates.

External appearance is an important factor, in most cases, for the transparent parts provided according to the present invention, so that it is recommended to use a mold having a product-forming section and a non-product-forming section, with the gate(s) being provided in the non-product-forming section. The "product-forming section" of the mold means the section where the portion of the molding offered as a product is formed, and the "non-product-forming section" of the mold is the section where the portion of the molding which is of no use for the product and is cut out in use or which constitutes the externally invisible portion of the product is formed.

A large-sized product with a large projected area is suited for molding according to the present invention.

The thermoplastic transparent resins usable in this invention include various types of resins from which appropriate one is selected according to the purpose of use and required performance of the product.

Typical examples of such resins are acrylic resin, polycarbonate, polystyrene, SAN resin, ABS resin, polyvinyl chloride resin, polyester resin, acetate resin and the like. Among them, acrylic resin is especially preferred because of its superiority in properties such as transparency, surface luster and weather resistance.

The acrylic resins usable in this invention include general-purpose acrylic materials, impact-resistant acrylic materials and heat-resistant acrylic materials.

The general-purpose acrylic materials referred to herein are essentially the polymers mainly composed of methyl methacrylate. Such polymers include single polymer of methyl methacrylate and copolymers obtained by copolymerizing methyl methacrylate with comonomers, e.g. alkyl acrylates having an alkyl group of 1-8 carbon atoms, such as methyl acrylate, ethyl acrylate, butyl acrylate, 2-ethylhexyl acrylate, etc., in a ratio of 15% or less.

The impact-resistant acrylic materials mentioned above are the ones obtained by copolymerizing methyl methacrylate with rubber materials such as polybutadiene, substituted polybutadiene, polymers of alkyl acrylates having a C₁₋₈ alkyl group or the like to provide impact resistance.

The heat-resistant acrylic materials include copolymers of methyl methacrylate and vinyl monomers such as α-methylstyrene, maleic anhydride, N-substituted maleimide, etc., and those incorporated with a ring structure of glutaric acid, glutarimide or the like.

The transparent films usable in the present invention include those of acrylic resin, polycarbonate, polystyrene, SAN resin, ABS resin, polyvinyl chloride resin, polyester resin, acetate resin and the like. Among them, acrylic resin is especially preferred for its superiority in terms of transparency, surface luster, weather resistance and other properties.

The transparent film used in this invention is one produced by T-die extrusion or inflation extrusion and having a thickness of 0.05-1 mm, preferably 0.1-0.3 mm. When the film thickness is less than 0.05 mm, the transparent film tends to wrinkle on feed of the molten thermoplastic transparent resin. On the other hand, when the film thickness exceeds 1 mm, it becomes difficult to perform molding because of spring-back of the transparent film due to its rigidity when the molten thermoplastic transparent resin serving as core material is supplied and molded.

An effective measure for avoiding spring-back of the film is to supply and mold the molten thermoplastic transparent resin after the transparent film has previously been molded under heating, but this method complicates the production process, leading to rise of production cost.

The transparent film is coated with a siloxane-based or polyfunctional acrylate-based hard coating agent. The siloxane-based hard coating agents usable here include the hydrolyzates of alkoxysilane or substituted alkoxysilane compounds. More specifically, there can be used the siloxane compounds obtained by subjecting to hydrolysis and condensation reaction the silicone functional silane compounds such as alkoxysilane, substituted alkoxysilane, etc., or alkoxysilane compounds having a functional group such as unsaturated group, expoxy group, amino group, mercapto group or the like, by adding water, an alcohol, an acid catalyst or the like. Such compounds are shown for instance in USP 3,451,838, JP-A-48-26221, JP-A-48-56230, JP-A-48-84878, JP-A-50-40674, JP-A-50-69184, JP-A-50-78639, JP-A-50-143822, JP-A-51-2343, JP-A-52-52931, JP-A-53-111336, JP-B-47-3709, JP-B-47-32416, JP-B-50-28446, JP-B-51-2343, JP-B-55-40631, JP-B-56-18625 and JP-B-56-39631.

The polyfunctional acrylate-based hard coating agents usable for coating the transparent film in this invention are those having two or more acryloyloxy groups or methacryloyloxy groups in one molecule, such as shown in JP-A-50-82713, JP-A-50-110477, JP-A-54-113693, JP-A-55-69670, JP-A-56-861, JP-A-56-122840, JP-A-58-87117, JP-A-58-101121, JP-A-58-129018, JP-A-63-68642, JP-A-63-168419 and JP-A-1-174515.

Various coating methods such as brushing, spray coating, dip coating, roll coating, etc., can be employed for coating of the transparent film, but roll coating is most preferred. The conditions for curing said hard coating agent by heat or ultraviolet rays are decided by taking into consideration the type of the hard coating agent used, the properties such as mechanical strength and heat resistance of the transparent film, and other factors.

In use of the transparent film 3 in the molding, it may be subjected to preliminary heating over the whole surface or partly thereof prior to feeding for adjusting tensile stress and elongation of the film.

The vertical positional relation between the female mold 1 and the male mold 2 and the clamping direction are optional. Also, the molten thermoplastic transparent resin 4 may be supplied either from the male mold side or from the female mold side.

Setting of the transparent film between the male mold 2 and the female mold 1 can be made by utilizing an external support mechanism or by using the set pins 7 or clamping mechanism provided at the periphery of the molds.

Depending on the shape of the product, the transparent film 3 may be simply placed on the bottom face. In this case, the supporting force of the transparent film 3 can be controlled by regulating the shear clearance b between the male mold 2 and the female mold 1 to be about 0.1-1.0 mm.

The following examples further illustrate the present invention.

### Evaluation methods

### (1) Surface hardness

Abrasion resistance was evaluated by rubbing the surface of each test piece with #1000 steel wool.
A: No scratch was formed even when the test piece surface was rubbed strongly.
B: Slight scratch marks were formed on the test piece surface when it was rubbed strongly.
C: Slight scratch marks were formed on the test piece surface when it was rubbed lightly.
D: The test piece surface was badly marred even when it was rubbed lightly.

### (2) Adhesiveness (Cross cut peel test)

By using a cutter knife, the test piece was cut crosswise, reaching the base, at intervals of 1 mm to form 100 pieces of 1 mm squares, and a cellophane adhesive tape was affixed thereon and stripped off rapidly.

This cellophane adhesive tape affixing and stripping-off operation was conducted three times at the same position, and the number of the squares which remained unseparated from the base was counted. The degree of adhesiveness was represented by the number of such squares.

### (3) Durability (Hot water immersion test)

After immersed in 80°C hot water for 200 hours, each sample was subjected to the above cross cut peel test to evaluate adhesiveness.

### (4) Warpage

Each sample (transparent part) to be tested was placed on a flat board and the greatest height of the rise (warpage) that occurred when depressed from above was measured.

### A. Preparation of siloxane-based hard coating agent

### (1) Synthesis of siloxane compound

68 g of isopropyl alcohol, 38 g of tetra-ethoxysilicon and 72 g of methyltriethoxysilicon were supplied into a hydrolyzing flask provided with a reflux condenser, and they were mixed and dissolved. 36 g of a 0.05N hydrochloric acid solution was added into the above solution and refluxed with stirring under heating for 5 hours to perform hydrolysis.

The reaction solution was cooled to room temperature to obtain a cohydrolyzate.

### (2) Preparation of hard coating agent

To 100 parts by weight of the above siloxane compound were added 40 parts by weight of n-butanol, 40 parts by weight of acetic acid and 20 parts by weight of xylene and they were dissolved. To this solution were further added and dissolved 0.4 parts by weight of sodium acetate and 0.2 parts by weight of a surface active agent NUC Silicone Y7006 available from Nippon Unicar Co., Ltd. to prepare a siloxane-based hard coating agent.

### B. Preparation of polyfunctional acrylate-based hard coating agent

### (1) Synthesis of dipentaerythritol hexaacrylate

127 g of dipentaerythrithol, 259 g of acrylic acid, 127 g of a mixed solvent (benzene/cyclohexane = 2/1), 6.3 g of sulfuric acid, 0.51 g of copper sulfate and 0.03 g of hydroquinone monomethyl ether were supplied into a 1 litre glass-made reactor equipped with a stirrer, a thermometer and a water separator.

The supplied materials were reacted under reflux with stirring while blowing air into the mixture, the reaction being carried out in a way that the distillates organic solvent and aqueous azeotropic mixture are separated from water and the organic solvent is returned to the reaction system. In the course of this reaction, 52 cc of water was effused out.

The reaction solution was cooled, added with 254 g of a mixed solvent (benzene/cyclohexane = 2/1), neutralized with a 10% sodium hydroxide solution, then separated and washed with a 10% saline solution.

Thereafter, the oil layer was dried over anhydrous magnesium sulfate and then the mixed solvent was removed under reduced pressure at 50-60°C to obtain 271 g of dipentaerythrithol hexaacrylate as still-bottom product. This product had a viscosity of 9,410 cps (at 25°C) and an ester value of 552 (theoretical value being 582.5).

### (2) Synthesis of polyfunctional urethane acrylate

242 g of trimethylolpropane diacrylate and 0.25 g of hydroquinone monomethyl ether were supplied into a 1 litre glass-made reactor equipped with a stirrer, a thermometer and a dropping funnel. To the mixture maintained at 60°C, 85 g of 2,4-tolylene diisocyanate was added dropwise over a period of one hour. Thereafter, the mixture was stirred for one hour and further reacted for 2 hours by adding 0.05 g of dibutyltin diacetate to obtain 325 g of a polyfunctional urethane acrylate. The isocyanate content of this polyfunctional urethane acrylate was 0.03%.

### (3) Preparation of polyfunctional acrylate-based hard coating agent

250 g of dipentaerythritol hexaacrylate and 250 g of polyfunctional urethane acrylate prepared in the manner described above were dissolved in a mixture of 467 g of xylene, 292 g of butyl acetate and 175 g of diacetone alcohol, followed by addition of 7.5 g of 1-hydroxycyclohexyl phenyl ketone as a photosensitizer and well mixing to prepare a polyfunctional acrylate-based hard coating agent.

### C. Production of transparent film coated with siloxane-based hard coating agent

An impact-resistant acrylic material SUMIPEX HT-55X available from Sumitomo Chemical Industries Co., Ltd. was subjected to T-die extrusion molding to obtain a 0.15 mm extruded film. Then the siloxane-based hard coating agent described in A above was coated on said film by a roll coater, and after air drying of the coated film, the film was once rolled up. Then the film was placed in an 80°C hot oven and kept therein for 3 hours to complete the heat curing reaction, consequently obtaining a transparent film coated with said siloxane-based hard coating agent.

### D. Production of transparent film coated with polyfunctional acrylate-based hard coating agent

An extruded film was obtained in the same way as described in C above, and this film was coated with the above-described polyfunctional acrylate-based hard coating agent and, after air drying of the coated film, exposed for 5 seconds to ultraviolet light from a 120 W high pressure mercury lamp (EYECURE UEO21-403C, 500V, H02-L41(2) available from Eyegraphics Corp.) set at a distance of 250 mm from the film, thereby forming a hard coated surface layer to obtain a transparent film coated with said polyfunctional acrylate-based hard coating agent.

### Example 1

A 3 mm thick glazing part for automobiles such as shown in Fig. 5 was obtained by using a mold having a molten thermoplastic transparent resin feed hole in the non-product-forming section of the bottom face. By using a polymethyl methacrylate resin SUMIPEX MH (melt flow rate: 2.0 g/10 min, available from Sumitomo Chemical Industries Co., Ltd.) as thermoplastic transparent resin and a transparent film coated with a hard coated surface layer formed by the siloxane-based hard coating agent described in C above, a abrasion-resistant glazing part for vehicles was molded according to the process explained above with reference to Figs. 1-4, under the conditions set out below. The obtained transparent part was free of tear and fold and had good appearance. In the surface hardness test, the part was rated "A", indicating excellent abrasion resistance of the part. Adhesiveness of the cured coated layer in the cross cut peel test was as high as 100/100 (no peel at all of the film), and its adhesiveness remained unchanged even after the hot water immersion test. Warpage of the molded part was not more than 1 mm.

| Molding conditions | |
|---|---|
| Resin temperature | 260°C |
| Mold temperature | 60°C |
| Cavity clearance at start of feed of molten resin | 7 mm |
| Cavity clearance at completion of molding | 3 mm |
| Clamping speed | 10 mm/sec |

### Comparative Example 1

A molded part (glazing) was obtained by following the same procedure as Example 1 except for use of a conventional injection mold in place of the specific mold employed in Example 1. As a result, folds were formed on the molding near the gate, spoiling the appearance of the product. Warpage of this molded product was 4 mm, greater than that (less than 1 mm) of the product of Example 1.

### Example 2

A glazing part was obtained by following the same procedure as Example 1 except for use of a transparent film coated with a hard coated surface layer formed with the polyfunctional acrylate-based surface hardening agent described in D above. Surface hardness of the obtained part was rated "A", which signifies good abrasion-resistance of the part. Adhesiveness of the hardened coat as determined by the cross cut peel test was excellent (100/100), and no change of adhesiveness was seen even after the hot water immersion test.

### Comparative Example 2

A molded part (glazing) was obtained by carrying out the same procedure as Example 2 except for use of a conventional injection mold. As a result, folds were formed on the molding near the gate, spoiling the appearance of the product. Also, warpage of this molded product was 4 mm, greater than that (not more than 1 mm) of the product of Example 1.

### Example 3

By using an acrylimide resin KAMAX T-240 (available from Rohm and Haas Co., Ltd.) as core resin and a transparent film having a hard coated surface layer formed with the siloxane-based hard coating agent described in C above, a abrasion-resistant glazing for vehicles was molded according to the process described above with reference to Figs. 1-4, under the following conditions. The obtained part was free of tear and fold and had good visual appearance. Surface hardness of the part was rated "A", which represents excellent abrasion-resistance. Adhesiveness of the cured coated layer as determined by the cross cut peel test was excellent (100/100), and its adhesiveness remained unchanged even after the hot water immersion test.

| Molding conditions | |
|---|---|
| Resin temperature | 280°C |
| Mold temperature | 80°C |
| Cavity clearance at start of feed of molten resin | 8 mm |
| Cavity clearance at completion of molding | 3 mm |
| Clamping speed | 10 mm/sec |

### Comparative Example 3

A molded part (glazing) was obtained by following the procedure of Example 3 except for use of a conventional injection mold. In this case, folds were formed on the molding near the gate, spoiling the appearance of the product. In order to see optical distortion of the product, it was observed through a Cross-Nicol's polarizer. A greater degree of polarization was seen than in the product of Example 3. Warpage of this molded product was 4 mm, greater than that (not more than 1 mm) of the product of Example 1.

According to the present invention, as described above, it is possible to produce the abrasion-resistant transparent parts at high efficiency.

## Claims

1. A process for producing a abrasion-resistant transparent part comprising the steps of:
(a) disposing a transparent film 3 having a hard coated surface layer between a male mold 2 and a female mold 1;
(b) starting clamping of said male mold 2 and female mold 1, and supplying a molten thermoplastic transparent resin 4 between said transparent film 3 and said male mold 2 or female mold 1 when the cavity clearance (a) formed between the male mold 2 and the female mold 1 is in the range of C + 0.1 to C + 7 mm (C: the cavity clearance at the time of completion of molding), by temporarily stopping the clamping motion or by adjusting the clamping speed to 30 mm/sec or less; and
(c) clamping the male mold 2 and the female mold 1 until the cavity clearance is reduced to C, thereby molding the resin.

2. The process according to Claim 1, wherein the hard coated surface layer is a cured surface layer formed with a siloxane-based hard coating agent.

3. The process according to Claim 1, using a transparent film having a cured surface layer formed with a polyfunctional acrylate-based surface hard coating agent containing 2 or more acryloyloxy group or methacryloyloxy group in the molecule.

4. The process according to any one of Claims 1 to 3, wherein the transparent film is an acrylic film.

5. The process according to any one of Claims 1 to 4, wherein the abrasion-resistant transparent part is a glazing part for vehicles.

## Patentansprüche

1. Verfahren zur Herstellung eines abriebfesten, transparenten Teils, umfassend die Schritte:
(a) Ablegen eines transparenten Films 3 mit einer hartbeschichteten Oberflächenschicht zwischen einer männlichen Form 2 und einer weiblichen Form 1;
(b) Beginn des Zusammenpressens der männlichen Form 2 und der weiblichen Form 1 und Zufuhr eines geschmolzenen, thermoplastischen, transparenten Harzes 4 zwischen dem transparenten Film 3 und der männlichen Form 2 oder der weiblichen Form 1, wenn die lichte Höhe des Hohlraums (a) zwischen der männlichen Form 2 und der weiblichen Form 1 im Bereich C + 0,1 bis C + 7 mm ist (C: lichte Höhe des Hohlraums mm Zeitpunkt der Beendigung des Formens), durch zeitweises Anhalten der Zusammenpreßbewegung oder durch Einstellen der Zusammenpreßgeschwindigkeit auf 30 mm/s oder weniger ;
und
(c) Zusammenpressen der männlichen Form 2 und der weiblichen Form 1, bis die lichte Höhe des Hohlraums auf C herabgesetzt ist, wodurch das Harz geformt wird.

2. Verfahren nach Anspruch 1, worin die harbeschichtete Oberflächenschicht eine gehärtete Oberflächenschicht aus einem Hartbeschichtungsmittel auf Siloxbasis ist.

3. Verfahren nach Anspruch 1, das einen transparenten Film mit einer gehärteten Oberflächenschicht aus einem Oberflächenhartbeschichtungsmittel auf polyfunktioneller Acrylatbasis verwendet, das 2 oder mehrere Acryloyloxygruppen oder Methacryloyloxygruppen im Molelkül enthält.

4. Verfahren nach einem der Ansprüche 1 bis 3, worin der transparente Film ein Acrylfilm ist.

5. Verfahren nach einem der Ansprüche 1 bis 4, worin das abriebfeste, transparente Teil ein Glasteil für Fahrzeuge ist.

## Revendications

1. Procédé de fabrication d'une pièce transparente résistante à l'abrasion, comprenant les étapes consistant :
(a) à disposer un film transparent (3) ayant une couche dure de revêtement superficiel, entre un moule mâle (2) et un moule femelle (1) ;
(b) à commencer à serrer lesdits moule mâle (2) et moule femelle (1), et à fournir une résine thermoplastique transparente fondue (4) entre ledit film transparent (3) et ledit moule mâle (2) ou moule femelle (1) lorsque l'espace libre (a) formé entre le moule mâle (2) et le moule femelle (1) est dans la gamme de C + 0,1 à C + 7 mm (C : espace libre au moment de l'achèvement du moulage), en stoppant temporairement le mouvement de serrage ou en réglant la vitesse de serrage à 30 mm/sec. ou moins ; et
(c) à serrer le moule mâle (2) et le moule femelle (1) jusqu'à ce que l'espace libre soit réduit à C, la résine étant ainsi moulée.

2. Procédé selon la revendication 1, dans lequel la couche dure de revêtement superficiel est une couche superficielle durcie formée avec un agent de revêtement dur à base de siloxane.

3. Procédé selon la revendication 1, utilisant un film transparent ayant une couche superficielle durcie formée avec un agent de revêtement de surface dur à base d'acrylate polyfonctionnel contenant 2 groupes acryloyloxy ou méthacryloyloxy ou plus dans la molécule.

4. Procédé selon l'une quelconque des revendications 1 à 3, dans lequel le film transparent est un film acrylique.

5. Procédé selon l'une quelconque des revendications 1 à 4, dans lequel la pièce transparente résistante à l'abrasion est une pièce de vitrage pour véhicules.
